# EUROPEAN PATENT APPLICATION

(11) **EP 4 524 788 A1**
(43) Date of publication of application: **19.03.2025**
(21) Application number: 23315352.7
(22) Date of filing: 13.09.2023
(51) Int. Cl.: G06F 21/54

(54) **METHOD FOR SECURELY PROTECTING EXECUTION OF A SOFTWARE CODE AGAINST FAULT INJECTION ATTACKS**

(71) Applicant: THALES DIS FRANCE SAS, 92190 Meudon (FR)
(72) Inventor: Pahaut, Olivier, 83270 SAINT CYR SUR MER (FR); Tourneur, Elouan, 83270 SAINT CYR SUR MER (FR); Dumas, Vincent, 13390 AURIOL (FR)
(74) Representative: Bricks, Amélie

(57) **Abstract**

The present invention relates to a method for protecting execution of a function of a software code against fault injection attacks,
said method being performed by an electronic system comprising a hardware processor and comprising performed by said hardware processor:
- a) saving (S1) an initial context of said function to be executed,
- b) successively executing at least two times said function, said initial context being restored before each execution after a first one, until a comparison between at least two checksums computed from the context of said function after successive executions of the function is indicative that no effect of any fault injection attack has disturbed the last execution of said function (S2) and,
- c) keeping a result of the last execution of said function as result of the function execution (S3).

## Description

### FIELD OF THE INVENTION

The present invention relates to the field of securing software execution on an electronic device against fault injection attacks.

### BACKGROUND OF THE INVENTION

Software execution on an electronic device may be subject to various attacks that enable an attacker to modify maliciously the software code execution on the electronic device or to gain knowledge of sensitive data stored on the secure device, such as secret cryptographic keys or banking information.

A particular type of attack is fault injection attacks in which an execution error is caused voluntarily by an attacker, for example using a laser, in order to turn the electronic device to an abnormal error state from which the attacker may be able to retrieve sensitive information or to disturb code execution flow.

Various countermeasures have been designed in order to prevent or resist such attacks. Such countermeasures may for example imply executing the same instruction flow at least twice in parallel, using different CPUs and memories, in order to be able to detect that an attack has occurred on one of the multiple execution paths.

One major drawback of such countermeasure is that they require to use an adapted device with a hardware compatible with multiple executions in parallel of the same instructions. A second drawback is that even if they are able to detect a fault injection attack, they often do not enable to determine the correct execution result of a function that has undergone an attack without executing one more time the function, which is costly. In addition, protections are useless against attacks which affect the electronic device has a whole, producing the same fault effect on all the parallel execution paths of the device.

Some protections are based on a counter which sets a maximum allowed number of successive executions, in order to prevent an attacker from executing endlessly the same function while performing its fault injection attack until his attack is not detected. A drawback of such counters is that they may be tampered with and they may be used for deny of service purpose or may be reset when the maximum number of executions has been reached.

As a result, there is a need for a method, and device, protecting an execution of a function against fault injection attacks, without requiring any specific hardware, without using a retry counter; and being efficient against fault injection attacks affecting the execution device as a whole.

### SUMMARY OF THE INVENTION

For this purpose and according to a first aspect, this invention therefore relates to a method for protecting execution of a function of a software code against fault injection attacks, said method being performed by an electronic system comprising a hardware processor and comprising performed by said hardware processor:
- a) saving an initial context of said function to be executed,
- b) successively executing at least two times said function, said initial context being restored before each execution after a first one, until a comparison between at least two checksums computed from the context of said function after successive executions of the function is indicative that no effect of any fault injection attack has disturbed the last execution of said function and,
- c) keeping a result of the last execution of said function as result of the function execution.

Such a method enables to both detect when an attack has occurred and ensure the correctness of the function execution, as if no attack had occurred.

Said context may comprise elements among hardware processor registers content, stack bytes, static or global variables values, heap content.

A comparison of at least two checksums may be indicative that no effect of any fault injection attack has disturbed the last execution of said function when said checksums are equal.

In an embodiment, the method according to the first aspect may comprise previously detecting an attack against said function.

In this embodiment wherein said software code may comprise, before a call to said function, an instruction storing the address of said function into a global variable, and wherein said electronic system comprises a non-volatile memory, the method according to the first aspect may comprise:
- after detecting an attack on said electronic system, retrieving the address from where the function was called and storing said retrieved address in said non-volatile memory,
- on the next startup of the electronic system:
   ○ determining if an attack has occurred during a previous execution of said function by checking if an address of a call to said function is stored in said non-volatile memory,
   ○ when it is determined that an attack has occurred during a previous execution of said function, updating the software code in said non-volatile memory by replacing at said address stored in said non-volatile memory the call to said function by a call to a new function which: performs the steps a), b) and c) wherein executing said function is performed by calling it at the address saved in said global variable.

Such a way of activating the protection according to the invention enables to keep it unactivated by default and to activate it only as a response to the detection of an attack against the last execution of the function.

According to a second aspect, this invention relates to a method for executing a first function in a software code protected by the method according to the first aspect and comprising calls to a plurality of functions and, before a call to the first function among said plurality of functions, an instruction storing the address of said first function into a global variable, said method comprising calling a function which performs the steps a), b) and c) wherein executing said first function is performed by calling it at the address saved in said global variable.

According to a third aspect, this invention relates to a computer program product directly loadable into the memory of at least one computer, comprising software code instructions for performing the steps of the methods according to the first and second aspect of the invention when said product is run on the computer.

According to a fourth aspect, this invention relates to an electronic system comprising a hardware processor configured for performing the steps of the methods according to the first and second aspect of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of an electronic system according to the present invention;
- Figure 2 is a schematic illustration of a method for protecting execution of a function of a software code against fault injection attacks according to an embodiment of the present invention;
- Figure 3 is a schematic illustration of a method for executing a first function in a software code protected by the method illustrated on figure 2 according to the present invention.

### DETAILED DESCRIPTION OF EMBODIMENTS OF THE INVENTION

According to a first aspect, the invention relates to a method for protecting the execution by an electronic system 1 of a software code, comprising calls to a plurality of functions, against fault injection attacks.

In the following paragraphs, the expression "function" is used as a generic term for any programmed set of operations, covering functions of any imperative programming language, methods of object-programming languages, routines...

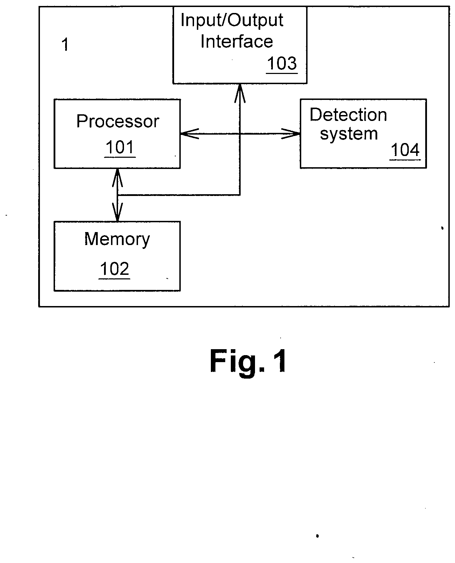

Such an electronic system comprises, as depicted on **Figure 1****,** a hardware processor 101 for the execution of the software code to be protected, and at least one memory 102, such as a Non-Volatile memory (NVM), a RAM memory and/or a ROM memory in which the software code is stored. Such an electronic system may for example be a tamperproof smartcard, a smartphone, a personal computer or a server. The electronic system may also include an input/output interface 103 providing interfaces to an administrator of the device, such as one or more screens, loudspeakers, a mouse, tactile surfaces, a keyboard etc...

In order to protect the execution of a function of the software code against fault injection attacks, the main idea of the invention is to execute this function several times in a row, sequentially, and to compare the results of these multiple executions in order to detect which executions have been subject to an attack, and, on the contrary, which haven't and can be used for outputting the correct result of executing the function. If an attack has occurred during one or more of the executions of the function, the executions which have not undergone the attack should all provide the same result, and, on the contrary, the executions which have undergone the attack should provide different results. Therefore, performing sequentially a large enough number of executions of the same function enables to determine which executions have suffered an attack, to discard their results, and to keep as result of the execution of the function only the result provided by the other executions of the function.

Performing the executions sequentially rather than in parallel also makes that no extra hardware, such as multiple CPU cores or CPUs, is required to perform additional executions after the first one.

In order to determine which executions have undergone an attack and which have not, solutions performing redundant computations often rely on a voting logic or a statistical analysis of the results, which may be costly. To be more effective, another idea of the invention is to take advantage of the fact that only valid executions, not perturbated by an attack, are likely to provide identical results. Therefore, the invention only looks for identical outputs of the last executions to detect that fault injection attacks have stopped and that the context of the last execution of the function was healthy, providing a healthy result.

In order to be able to compare the outcomes of several executions of the same function, one should compare the values of items which are modified by the execution of the function and whose value can be different than expected when a fault injection attack occurs during the execution of the function. In addition, the inputs of the function should also have the same value before each new execution of the same function. In the following paragraphs, the inputs to a function and the items which are modified by the execution of the function will be collectively referred to as the "context" of the function. Such a context may for example comprise elements among the content of hardware processor (CPU, MCU, GPU) registers, stack bytes, static or global variables values (for example located in data or .bss memory sections) or the heap content.

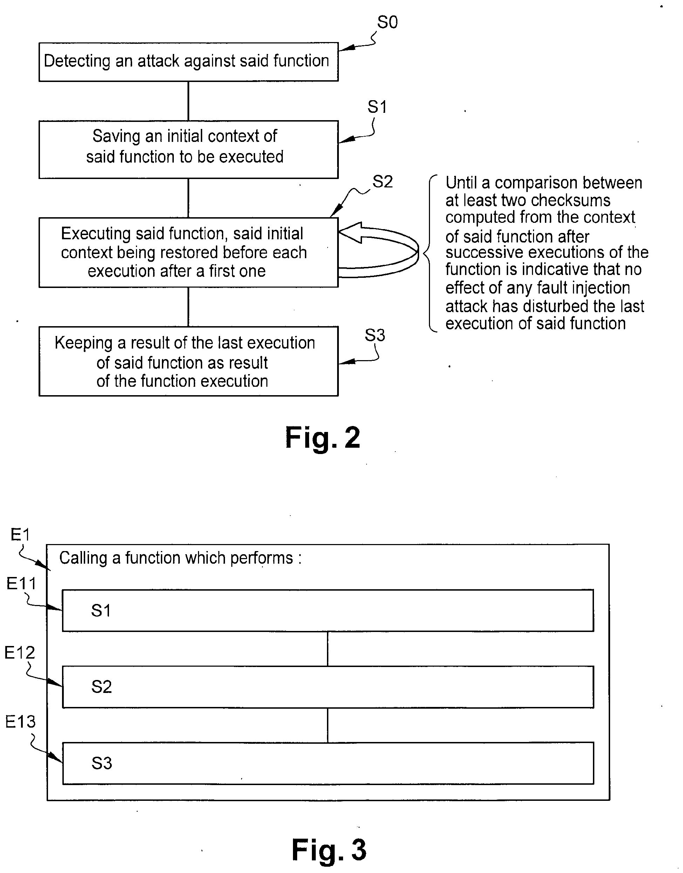

The following paragraphs describe in detail the steps, shown on **Figure 2****,** of the method for protecting the execution of a function of a software code by the electronic system according to the invention.

In a first step S1, the hardware processor of the electronic system saves the initial context of the function to be executed. It is the part of the context of the function, as described above, which will need to be reloaded before each new execution of the function in order to get comparable outputs from multiple executions of the same function. This step is performed only once, before a first execution of the function.

In a second step S2, the function is executed by the hardware processor. This step is repeated at least two times. More in case a fault injection attack occurs during at least one execution of the function. After the first execution of the function, the initial context of the function saved at the first step is restored before each further execution of the function. After each execution, a checksum is computed from the context of the function and the checksums computed at the end of at least the two last executions of the function are compared. The electronic system stops repeating step two when such a comparison of checksums at the end of an execution of the function is indicative that the electronic system has not undergone any fault injection attack during the last execution of the function, for example when the compared at least two checksums are equal. Such checksums may for example be outputs of hash functions, such as MD5 or SHA-256.

In a third step S3, the hardware processor keeps the result of the last execution of the function as the sought result of the function execution.

A drawback of the protection method described above is that it multiplies by two or more the number of executions of each function to be protected, and therefore the execution time of the software code. It may be desirable that such a protection is not activated by default, but rather that the electronic system may detect the occurrence of an attack during the execution of a function to be protected and that it applies dynamically, only at the next execution of the attacked function, the security countermeasure described above protecting it against fault injection attacks.

In order to do so, the electronic system may comprise a detection system 104 configured to detect an attack on the electronic system during an execution of a function during a prior step S0. Such a detection may be performed continuously during the operation of the electronic system until an attack is detected.

In order to dynamically activate countermeasures, the software code may comprise, before a call to the function to be protected, an instruction storing the address of this function into a global variable.

After detecting an attack, the electronic system may retrieve the address from where the function was called, store the retrieved address in a non-volatile memory of the electronic system and stop the execution of the function currently executed. The address of the call can be retrieved from the address of the next instruction, where the Program Counter should be set after the end of the execution of the first function. This address of the next instruction can be stored in the LR register or the C-stack of the hardware processor.

On the next startup of the electronic system, the processor may then determine if an attack has occurred during a previous execution of the function by checking if an address of a call to the function is stored in the non-volatile memory. When it is determined that an attack has occurred during a previous execution of the function, the processor may update the software code in said non-volatile memory by replacing at the address stored in the non-volatile memory the call to the function to be protected by a call to a wrapper function which performs the first, second and third steps such that the function is executed at the second step by calling it at the address saved in the global variable.

By doing so, the call to the function to be protected is replaced by a call to a wrapper function, which executes the function in a way that it is protected according to the protection described above in the first, second and third steps, in order to defeat fault injection attacks.

After the software code has been updated, it gets executed as illustrated on **Figure 3****.** Just before executing the call to the wrapper function described above, the electronic system executes the instruction storing the address of the function to be protected into a global variable. Then it calls during a first execution step E1 the wrapper function which performs the first step S1, the second step S2 and the third step S3.

In order to store the address of the function to be protected in a global variable, in a prior step, the software code may be updated by inserting in the software code, before each call to a function, an instruction storing the address of this function into a global variable. In order to make things easier for the wrapper function described above, all such instructions may use the same unique global variable for storing the address to be saved. Such an update may be performed by a compiler itself during the compilation of the software code. Alternatively, it can be done by the compiler, or by an external tool, at the end of the compilation, or after the end of the compilation and before linking the compiled software code. Alternatively, such an update is performed in the source code of the software code, before it is compiled.

According to a second aspect, the invention relates to a computer program product directly loadable into the memory of at least one computer, comprising software code instructions for performing, when said product is run on the computer, the steps of the methods described here before.

According to a third aspect, this invention relates to an electronic system 1 which may comprising a hardware processor 101, a non-volatile memory 102 and a detection system 104 configured for performing the steps of the methods described here before.

In addition to these features, the computer program and the electronic system according to the second and third aspects of the invention may be configured for performing or may comprise any other features described here before.

The electronic system and method presented here therefore enable to efficiently protect the execution of a function against fault injection attacks, without requiring any additional hardware. It is efficient even against fault injection attacks which have an impact on the whole electronic system. In addition to detecting the attack, it ensures that the last execution of the function was not disturbed and it provided a good result and an healthy context for the next functions to be executed.

## Claims

1. A method for protecting execution of a function of a software code against fault injection attacks,
said method being performed by an electronic system (1) comprising a hardware processor (101) and comprising performed by said hardware processor:
- a) saving (S1) an initial context of said function to be executed,
- b) successively executing at least two times said function, said initial context being restored before each execution after a first one, until a comparison between at least two checksums computed from the context of said function after successive executions of the function is indicative that no effect of any fault injection attack has disturbed the last execution of said function (S2) and,
- c) keeping a result of the last execution of said function as result of the function execution (S3).

2. The method of claim 1, wherein said context comprises elements among hardware processor registers content, stack bytes, global variables values or heap content.

3. The method of claim 1 or 2, wherein a comparison of at least two checksums is indicative that no effect of any fault injection attack has disturbed the last execution of said function when said checksums are equal.

4. The method of any one of claims 1 to 3, comprising previously detecting an attack against said function (S0).

5. The method of claim 4, wherein said software code comprises, before a call to said function, an instruction storing the address of said function into a global variable, and said electronic system comprises a non-volatile memory, and comprising:
- after detecting an attack on said electronic system, retrieving the address from where the function was called and storing said retrieved address in said non-volatile memory,
- on the next startup of the electronic system:
∘ determining if an attack has occurred during a previous execution of said function by checking if an address of a call to said function is stored in said non-volatile memory,
∘ when it is determined that an attack has occurred during a previous execution of said function, updating the software code in said non-volatile memory by replacing at said address stored in said non-volatile memory the call to said function by a call to a new function which: performs the steps a), b) and c) wherein executing said function is performed by calling it at the address saved in said global variable.

6. A method for executing a first function in a software code protected by the method of any one of claims 1 to 5 and comprising calls to a plurality of functions and, before a call to the first function among said plurality of functions, an instruction storing the address of said first function into a global variable,
said method comprising calling a function (E1) which performs the steps a), b) and c) wherein executing said first function is performed by calling it at the address saved in said global variable.

7. A computer program product directly loadable into the memory of at least one computer, comprising software code instructions for performing the steps of any one of claims 1 to 6 when said product is run on the computer.

8. An electronic system comprising a hardware processor configured for performing the steps of any one of claims 1 to 6.
